# EUROPEAN PATENT SPECIFICATION

(11) **EP 1 180 088 B1**
(45) Date of publication and mention of the grant of the patent: **30.07.2003**
(21) Application number: 00927587.6
(22) Date of filing: 15.05.2000
(51) Int. Cl.: B65G 15/00

(54) **ADVERTISING INDICIA ON A CONVEYOR BELT**
WERBEINFORMATION AUF EINEM FÖRDERBAND
INSCRIPTIONS PUBLICITAIRES SUR UNE BANDE TRANSPORTEUSE

(30) Priority: 13.05.1999 GB 9911010
(43) Date of publication of application: 20.02.2002
(73) Proprietor: Market Ideas Limited, Blackpoole FY6 7NS (GB)
(72) Inventor: PAYNE, John Michael, Maxey, Peterborough PE6 9EE (GB)
(74) Representative: Lipscombe, Martin John
(86) International application number: GB0001862
(87) International publication number: WO00069759

(56) References cited:
- EP-A- 0 511 025
- WO-A-96/27180
- US-A- 4 395 263
- US-A- 4 979 591
- US-A- 5 244 080
- US-A- 5 697 491

## Description

### Field of the Invention

This invention relates to a conveyor belt and to a method of making a conveyor belt.

### Background of the Invention

Conveyor belts are well known devices used to convey objects or materials from one place to another, for example they are used in supermarket check-out stations to convey the products that the customer has chosen to the check-out assistant, who then enters their price into their till (typically by scanning a bar code), and places them onto an area where they can be packaged. Similar belts are also used in industrial situations (e.g. on production lines).

Sometimes it is desirable to print information on the top, conveying surface of the belt, for example to give the belt manufacturers' name, or technical information. In addition, the present inventor considers that it would be desirable to use a conveyor belt as an advertising medium, for example in supermarket check-out stations.

Printing information onto the top surface of a conveyor belt has been performed previously, but a problem has arisen in that the printed area is abraded by the continuous flow of objects being conveyed, so that within a relatively short time the printed area becomes unreadable or non-acceptable in appearance.

US Patent 4,979,591 discloses a conveyor belt having a multiple fabric layer overlayed with a thermoplastic material, such as polyvinyl chloride (PVC). An image is then transferred to the PVC layer by transfer printing (i.e. sublimation printing), in which process a dyesheet contacted with the belt is locally heated to cause local sublimation of the dyestuff on the dyesheet and transfer onto the PVC layer of the belt. The resulting image on the upper surface of the belt is then covered with a film of transparent plastic, but there is no teaching or suggestion in US 4,979,591 as to the identity of a material suitable for use as the transparent film. The purpose of the plastic film is to protect the belt, and the transfer printed image thereon, from abrasion and scratches. Naturally the plastic film must be transparent, otherwise the printed image on the belt will not be visible through the plastic film. Transfer printing, of the type disclosed in US 4,979,591 is not ideal, as it tends to lead to the formation of diffuse images. In addition, some colours (especially white) are not readily available as transfer dyes.

WO 97/43125 discloses a method of making a conveyor belt, in which an image is formed on a PVC belt by silk screen printing. The inks forming the image are caused to adhere to the PVC substrate by subjecting the printed belt to a heat treatment. comprising blowing air at about 80°C over the belt for a period of approximately 15 seconds. The resulting printed belt may optionally be provided with a coating of a conventional, clear PVC varnish.

In both US 4,979,591, and WO 97/43125, an image is formed on the belt when the belt is already in its substantially finished form. As there are severe constraints on the thickness of the belt, (e.g. so as to be usable with existing equipment intended for use with conventional conveyor belts), there is little possibility of adding a thick protective layer over the image, with the result that the image is vulnerable to abrasion and scratching.

### Summary of the Invention

In a first aspect the invention provides a conveyor belt, the belt comprising a substrate layer with an information display formed on the uppermost surface thereof and wherein the substrate layer is overlaid by one or more transparent or translucent coating layers of a thermosetting plastic material such that the information display is visible therethrough.

Conveniently, the coating layer will form a substantially continuous coating on top of the substrate layer, which arrangement facilitates manufacture.

For present purposes, a thermosetting material is a material which requires the application of heat for the material to harden. Thermosetting materials, in particular, may be distinguished from varnishes which harden as a result of solvent evaporation, and will therefore harden at room temperature within a relatively short period of time.

The information display may comprise letters (especially words), numerals, images or any combination thereof. In particular the information display may comprise advertising or promotional material. Preferably the information display is formed on the substrate by a means other than transfer printing. Preferred methods of forming the information display comprise inkjet or laser printing or, more preferably, silk screen printing. Preferably the information display is formed by the use of acrylic-based inks. Silk screen printing allows for the formation of an information display of far greater resolution than is obtainable by transfer printing.

The substrate layer may itself be laminate in nature. For example, the substrate layer may typically comprise one or more fabric layers (e.g. comprising woven polyester material) and one or more resin layers (e.g. comprising PVC or similar resinous material). In one embodiment, the substrate layer comprises a bottom layer of fabric and a top layer of resin, with information displayed on the surface of the resin layer. In a preferred, alternative, embodiment the substrate layer comprises a first resin layer sandwiched between two fabric layers, with a second resin layer on top of the upper fabric layer, with information displayed on top of the second resin layer.

The coating layer may comprise any translucent or transparent thermosetting material which is compatible with the substrate layer and suitable for use in a conveyor belt. Preferably the coating layer provides good resistance to abrasion, and thereby prolongs the time over which the information, displayed on the substrate layer beneath, remains visible. The coating layer should be able to bond to the substrate layer and/or the information displayed thereon, so as to be resistant to delamination. In addition the coaling layer should preferably be resistant to cracking and should not become opaque within a short period of time. The present inventor has found transparent or translucent formulations comprising PVC are preferred. Typically a belt in accordance with the invention will comprise 4 or 5 layers of transparent PVC resin, which provides excellent resistance to wear and abrasion.

In a preferred embodiment the substrate layer of the belt (especially the uppermost surface thereof) will comprise an opaque thermosetting PVC resin layer, which is of substantially similar composition to the thermosetting PVC resin transparent or translucent material used to form the coating layers. The material can be rendered opaque, when used for the substrate layer, by the addition of a suitable pigment (e.g. carbon powder for a blackcoloured belt, oxides of zinc or titanium for a white-coloured belt).

The inventor has found that coating a conveyor belt with a PVC varnish, as disclosed in WO 97/43125, does not provide adequate protection for the displayed information which soon becomes worn and illegible. In contrast, providing a PVC coating as a number of layers of thermosetting material, creates a far stronger protective "shell". In addition, the provision of the one or more coating layers serves to bind the displayed information to the substrate layer, without the need for the heal treatment step taught in WO 97/43125.

Further, conveyor belts in accordance with the invention have far thicker coating layers overlying the information displayed on the belt than those disclosed in the prior art, whilst still having a thickness essentially identical to that of unconventional, unprinted conveyor belts. This is achieved by forming the information display on the belt at an earlier stage in its construction, whilst still unfinished. The partly-made, printed belt may then be completed, and brought to the thickness of conventional conveyor belts, by the application of the coating layers. Typically 4 or 5 separate layers of transparent PVC resin are applied to build up the coating layer, and hence the belt as a whole, to the desired thickness. Each separate layer of transparent PVC resin is cured (by heating) before the next layer of resin is applied.

In a second aspect, the invention provides a method of making a conveyor belt having information displayed thereon, the method comprising the steps of, making a substrate layer; printing on the uppermost surface of the substrate layer information to be displayed thereon, and coating the printed surface of the substrate layer with one or more transparent or translucent coating layers of a thermosetting plastic material such that the displayed information is visible therethrough.

It will be apparent to those skilled in the art that the printing step is performed whilst the belt is still only partly-made, which allows for a considerable thickness of coating layer to be applied on top of the displayed information, leading to superior protection of the display against wear, abrasion and scratches.

Preferably the uppermost surface of the substrate layer is formed from one or two layers of opaque thermosetting PVC resin. The coating layers will have a substantially similar composition, but will be transparent or translucent (i.e. not contain any added pigment).

Preferably the method is such that, when performed, it results in the production of a conveyor belt in accordance with the first aspect of the invention defined above.

The invention will now be, further described by way of illustrative example and with reference to the accompanying drawings, in which:-
Figure 1 is a diagrammatic sectional view, showing the construction of a conventional "two ply" conveyor belt of the type used in supermarket check-out stations, with printing on its top, i.e. conveying surface:
Figures 2 and 3 are diagrammatic sectional views showing intermediate steps in the construction of a conveyor belt in accordance with the invention:
Figure 4 is a diagrammatic sectional view of a "two ply" conveyor belt in accordance with the invention;
Figure 5 is a diagrammatic sectional view of a conventional "single ply" conveyor belt; and
Figure 6 is a diagrammatic sectional view of a "single ply" conveyor belt in accordance with the invention.

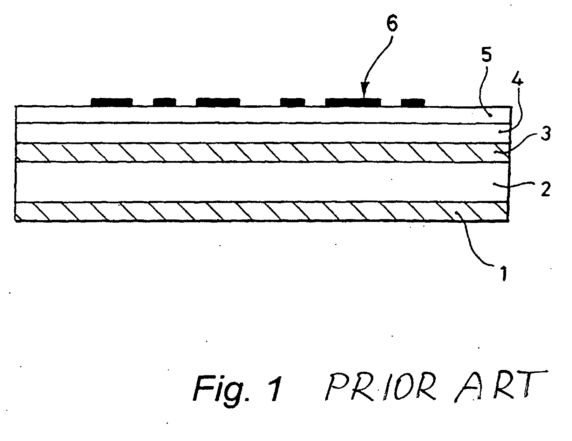

Referring to Figure 1, a fabric layer 1, generally made of a woven polyester material, is coated with a layer of liquid plastisol PVC resin 2. A further layer 3 consisting of woven polyester fabric is placed onto the PVC layer 2. This sandwich is heated to bond all three layers such that the PVC layer 2 penetrates partially into the woven fabric layers 1 and 3 but does not bleed through it. A further liquid layer of PVC 4 is then coated onto the top of the fabric layer 3 and cured. The coating thickness of layer 4 has a maximum of typically 0.3 to 0.4 mm, which is not thick enough to provide the mechanical properties required for the belt, so a further layer 5 of PVC, again with a typical thickness 0.3 to 0.4mm, is coated onto layer 4 and cured. Additional layers of PVC may be added to increase the belt thickness as desired. Conventional printing onto the top surface of the belt is shown as 6, for example by silk screen. In this typical construction the layers of PVC 4 and 5 are pigmented and are opaque. Since there is no coating overlying the printed image 6, the image is vulnerable to abrasion and scratches.

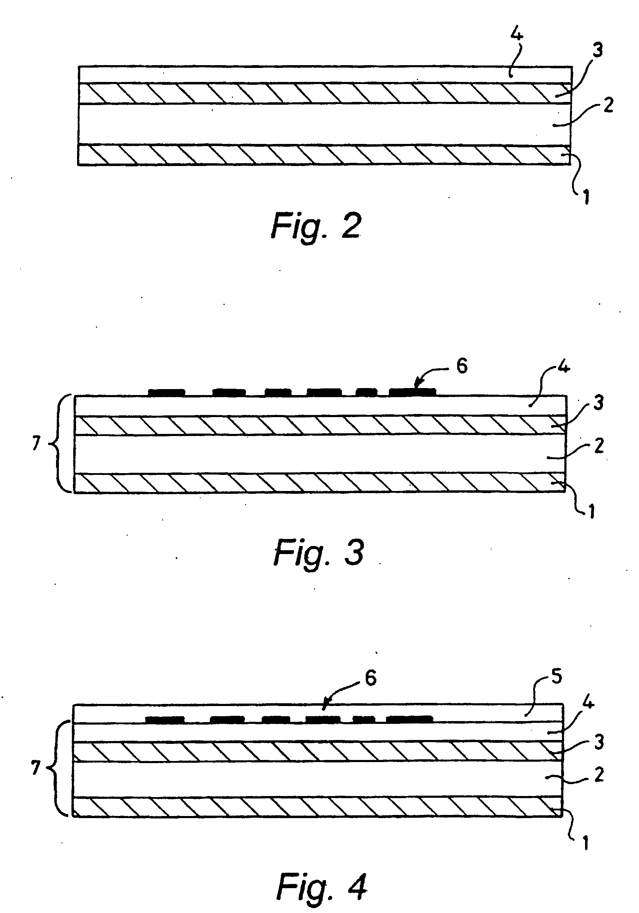

Figure 2 shows the construction of a typical conveyor belt as described for Figure 1, but shows the process has been arrested after layer 4 has been applied.

Figure 3 shows a printed area 6 on top of layer 4. This printing can be done by conventional methods, for example by means of silk screen printing, using inks which are compatible with PVC and will bond strongly with it. In Figure 3, layers 1-4 together constitute the substrate layer 7.

Figure 4 shows the finished belt comprising a coating layer 5 which is transparent and which will bond strongly with layer 4 and with the printed ink 6 so that delamination will not occur. Typically the transparent coating is provided in four or five separate layers. The thickness of the transparent coating layer 5 is generally selected to be the same as on a conventional belt, and could for example consist of PVC polymer. This transparent layer protects the printed areas from abrasion by the objects being conveyed on the belt whilst allowing the printed areas to be viewed.

Other configurations of this invention may be used, for example the fabric layer 3 could itself be printed by conventional means such as silk screen printing, which is then subsequently coated with one or more layers of transparent PVC or other transparent materials.

The aforementioned processes relate to what is known as a two ply PVC flat conveyor belt, the ply referring to the number of fabric layers. There are other configurations including a single ply PVC flat conveyor belt. The current invention can be applied to the single ply PVC belt as follows.

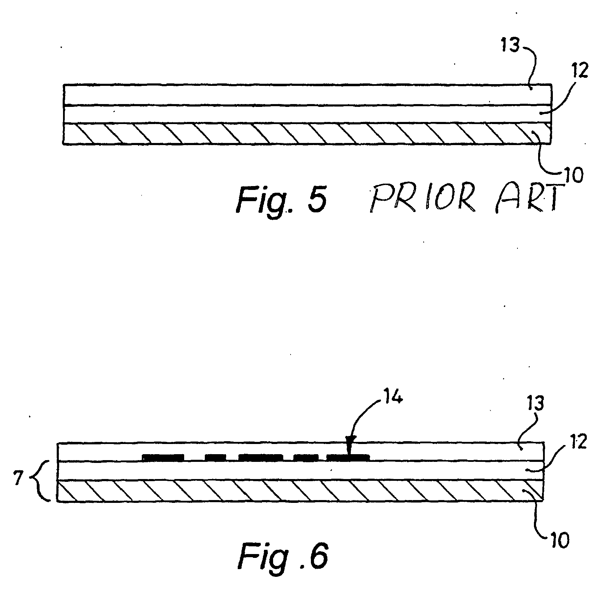

Figure 5 shows diagrammatically the construction of a conventional single ply PVC conveyor belt, where a woven polyester fabric layer 10 is coated on its top side with one or more layers 12, 13 of liquid PVC, each coat being cured before the addition of the next.

Figure 6 shows printed areas 14 which are applied onto layer 12, which typically is a pigmented PVC polymer. In Figure 6, layers 10 and 12 together constitute the substrate layer 7. After the printed area is cured, a transparent PVC coating layer 13 is coated onto the printed area and substrate layer.

Some applications for these belts require that the top surface is of a matt finish to prevent reflection from overhead light sources. This can be achieved by mechanically texturing the surface whilst it is still soft, using a textured roller or by having a polymer with a chemical formulation that produces a non reflective surface. This may be a polymer such as PVC or polyurethane.

## Claims

1. A conveyor belt, the belt comprising a substrate layer (7) with an information display (6) formed on the uppermost surface thereof, and wherein the substrate layer (7) is overlaid by one or more transparent or translucent coating layers (5) comprising a thermosetting plastic PVC resin material such that the information display (6) is visible therethrough.

2. A conveyor belt according to claim 1, wherein the one or more transparent or translucent coating layers (5) form a substantially continuous coating on top of the substrate layer.

3. A conveyor belt according to claim 1 or 2, wherein the substrate layer (7) is laminate in nature.

4. A conveyor belt according to any one of claims 1, 2 or 3, wherein the substrate layer (7) comprises one or more fabric layers(1, 3) and one or more resin layers (2, 4).

5. A conveyor belt according to any one of the preceding claims, wherein a transparent or translucent coating layer (5) is bonded to the substrate layer (7) so as to resist delamination in use, and wherein the coating layer (5) is resistant to cracking.

6. A conveyor belt according to any one of the preceding claims, wherein information (6) is applied to the uppermost surface of the substrate layer (7) by means of a silk screen printing process.

7. A method of making a conveyor belt having information (6) displayed thereon, the method comprising the steps of: making a substrate layer (7); printing on the uppermost surface of the substrate layer (7) information (6) to be displayed thereon; and coating the printed surface of the substrate layer (7) with one or more transparent or translucent coating layers (5) comprising a thermosetting plastic PVC resin material such that the displayed information (6) is visible therethrough.

8. A method according to claim 7, wherein an information display is printed on the uppermost surface of the substrate layer (7) by means of silk screen printing.

9. A method according to claim 7 or 8, performance of which results in a conveyor belt in accordance with any one of claims 1-6.

## Patentansprüche

1. Förderband, bestehend aus einer Substratschicht (7), auf deren Oberseite ein Informationsdisplay (6) gebildet ist, wobei die Substratschicht (7) mit einer oder mehren Schichten eines durchsichtigen oder lichtdurchlässigen Belags (5) bedeckt ist, der aus einem duroplastischen PVC-Harz-Material besteht, sodass das Informationsdisplay (6) durch die Schicht oder die Schichten hindurch sichtbar ist.

2. Förderband nach Anspruch 1, wobei die durchsichtige oder lichtdurchlässige Belagschicht oder die durchsichtigen oder lichtdurchlässigen Belagschichten (5) auf der Oberseite der Substratschicht einen im Wesentlichen kontinuierlichen Belag bilden.

3. Förderband nach Anspruch 1 oder 2, wobei die Substratschicht (7) laminiert ist.

4. Förderband nach einem der Ansprüche 1, 2 oder 3, wobei die Substratschicht (7) aus einer oder mehreren Gewebeschichten (1, 3) und einer oder mehreren Harzschichten (2,4) besteht.

5. Förderband nach einem der vorhergehenden Ansprüche, wobei die Belagschicht (5) rissfest ist und eine durchsichtige oder lichtdurchlässige Belagschicht (5) so an die Substratschicht (7) gebunden ist, dass beim Gebrauch keine Schichtspaltung entsteht.

6. Förderband nach einem der vorhergehenden Ansprüche, wobei die Information (6) mittels eines Siebdruckverfahrens auf die Oberseite der Substratschicht (7) appliziert wird.

7. Methode zum Informationsdisplay (6) auf einem Förderband, die aus folgenden Schritten besteht: eine Substratschicht (7) herstellen; die aufzuzeigende Information (6) auf die Oberseite der Substratschicht (7) drucken; und die bedruckte Fläche der Substratschicht (7) mit einer oder mehreren Schichten eines durchsichtigen oder lichtdurchlässigen Belags (5) versehen, der aus einem duroplastischen PVC-Harz-Material besteht, sodass das Informationsdisplay (6) durch die Schicht oder die Schichten hindurch sichtbar ist.

8. Methode nach Anspruch 7, wobei das Informationsdisplay im Siebdruckverfahren auf die Oberseite der Substratschicht (7) gedruckt wird.

9. Methode nach Anspruch 7 oder 8, deren Ausführung ein Förderband nach einem der Ansprüche 1 bis 6 erzeugt.

## Revendications

1. Une bande transporteuse, la bande se composant d'un substrat (7) comprenant un dispositif d'affichage de l'information (6) formé sur la surface supérieure de la bande, et dans laquelle le substrat (7) est recouvert d'une ou plusieurs couches d'un revêtement transparent ou translucide (5) composé d'une résine plastique de PVC thermodurcissable à travers laquelle le dispositif d'affichage (6) est visible.

2. Une bande transporteuse conforme à la revendication 1, dans laquelle une ou plusieurs couches d'un revêtement transparent ou translucide (5) forment un revêtement dans l'ensemble continu sur la partie supérieure de la couche du substrat.

3. Une bande transporteuse conforme aux revendications 1 ou 2, dans laquelle le substrat (7) est du type laminé.

4. Une bande transporteuse conforme aux revendications 1, 2 ou 3, dans laquelle le substrat (7) se compose d'une ou plusieurs couches de tissu (1, 3) et une ou plusieurs couches de résine (2,4).

5. Une bande transporteuse conforme à une quelconque des revendications précédentes, dans laquelle une couche d'un revêtement transparent ou translucide (5) est fixée sur le substrat (7) afin de résister au moindre décollement en cours d'usage, et dans laquelle la couche de revêtement (5) est résistante aux déchirures.

6. Une bande transporteuse conforme à une quelconque des revendications précédentes, dans laquelle les informations (6) sont appliquées sur la surface supérieure du substrat (7) par sérigraphie.

7. Une méthode permettant l'affichage d'informations sur une bande transporteuse, cette méthode se composant des stades suivants : formation d'un substrat (7) ; impression sur la surface supérieure du substrat (7) des informations (6) qui doivent être affichées sur celui-ci ; et revêtement de la surface imprimée avec une ou plusieurs couches d'un revêtement transparent ou translucide (5) composé d'une résine plastique de PVC thermodurcissable à travers laquelle les informations (6) affichées sont visibles.

8. Une méthode conforme à la revendication 7, dans laquelle un dispositif d'affichage de l'information est imprimé sur la surface supérieure du substrat (7) par sérigraphie.

9. Une méthode conforme aux revendications 7 ou 8, dont l'application permet d'obtenir une bande transporteuse conforme à une quelconque des revendications 1 - 6.
